# EUROPÄISCHE PATENTANMELDUNG

(11) **EP 4 183 507 A1**
(43) Veröffentlichungstag der Anmeldung: **24.05.2023**
(21) Anmeldenummer: 21209990.7
(22) Anmeldetag: 23.11.2021
(51) Int. Cl.: B23D 49/16, B23D 51/20

(54) **HANDGEFÜHRTE SÄGEMASCHINE**

(71) Anmelder: Hilti Aktiengesellschaft, 9494 Schaan (LI)
(72) Erfinder: Haas, Günter, 86916 Kaufering (DE)
(74) Vertreter: Hilti Aktiengesellschaft Corporate Intellectual Property

(57) **Zusammenfassung**

Die Erfindung betrifft eine handgeführte Sägemaschine (20) mit einer Antriebseinrichtung (27), mit einer eine Gehäuseeinrichtung (24) aufweisenden Getriebeeinrichtung (22) und mit einer Pendelhubstange (26), die in Wirkverbindung mit einem insbesondere als Sägeblatt (32) ausgeführten Werkzeug bringbar und in einer Lagerungseinrichtung (28) gelagert ist. Die Antriebseinrichtung (27) ist zur Verlagerung der Pendelhubstange (26) gegenüber der Lagerungseinrichtung (28) im Wesentlichen in einer linearen Bewegung (30) ausgeführt. Die Antriebseinrichtung (27) wirkt in einem ersten Verbindungsbereich (42) mit der Lagerungseinrichtung (28) zur Bewegung des ersten Verbindungsbereichs (42) der Lagerungseinrichtung (28) gegenüber der Gehäuseeinrichtung (24) zusammen. Es ist vorgesehen, dass die Antriebseinrichtung (27) in einem zweiten Verbindungsbereich (60) mit der Lagerungseinrichtung (28) zur Bewegung des zweiten Verbindungsbereichs (60) der Lagerungseinrichtung (28) in einer zumindest eine translatorische Bewegungskomponente aufweisenden Bewegung gegenüber der Gehäuseeinrichtung (24) zusammenwirkt.

## Beschreibung

Die Erfindung betrifft eine handgeführte Sägemaschine mit einer Antriebseinrichtung, mit einer eine Gehäuseeinrichtung aufweisenden Getriebeeinrichtung und mit einer Pendelhubstange, die in Wirkverbindung mit einem Werkzeug bringbar und in einer Lagereinrichtung gelagert ist, gemäß der im Oberbegriff des Patentanspruches 1 definierten Art.

Aus der Praxis sind Säbelsägen bekannt, bei denen eine Pendelhubstange in einer Lagereinrichtung angeordnet und translatorisch gegenüber der Lagereinrichtung verlagerbar sind. Die Lagereinrichtung ist hierbei in einem Gelenkpunkt schwenkbar gegenüber einem Getriebegehäuse gelagert. In einem hiervon beabstandeten Bereich ist die Lagereinrichtung von einer Antriebseinrichtung antreibbar, so dass die Lagereinrichtung im Betrieb der Säbelsäge um den Gelenkpunkt gegenüber dem Getriebegehäuse verschwenkt wird. Darüber hinaus wird die Pendelhubstange über die Antriebseinrichtung in Längsrichtung der Pendelhubstange gegenüber der Lagereinrichtung bewegt.

Eine derartige Ausführung hat den Nachteil, dass Sägezähne eines mit der Pendelhubstange in Wirkverbindung gebrachten Sägeblatts im Betrieb der Sägemaschine unterschiedliche, voneinander abweichende Bewegungen ausführen. Dies kann dazu führen, dass das Sägeblatt im Betrieb der Säbelsäge von einem zu bearbeitenden Werkstück abhebt und hierdurch eine Sägeleistung in unerwünschtem Umfang reduziert wird.

Es ist daher Aufgabe der vorliegenden Erfindung, eine handgeführte Sägemaschine zu schaffen, bei der eine Sägeleistung erhöht ist.

Es wird somit eine handgeführte Sägemaschine mit einer Antriebseinrichtung, mit einer eine Gehäuseeinrichtung aufweisenden Getriebeeinrichtung und mit einer Pendelhubstange vorgeschlagen, die in Wirkverbindung mit einem insbesondere als Sägeblatt ausgeführten Werkzeug bringbar und in einer Lagerungseinrichtung gelagert ist, wobei die Antriebseinrichtung zur Verlagerung der Pendelhubstange gegenüber der Lagerungseinrichtung im Wesentlichen in einer linearen Bewegung ausgeführt ist, und wobei die Antriebseinrichtung in einem ersten Verbindungsbereich mit der Lagerungseinrichtung zur Bewegung des ersten Verbindungsbereichs der Lagerungseinrichtung gegenüber der Gehäuseeinrichtung zusammenwirkt.

Erfindungsgemäß ist vorgesehen, dass die Antriebseinrichtung in einem zweiten Verbindungsbereich mit der Lagerungseinrichtung zur Bewegung des zweiten Verbindungsbereichs der Lagerungseinrichtung in einer zumindest eine translatorische Bewegungskomponente aufweisenden Bewegung gegenüber der Gehäuseeinrichtung zusammenwirkt.

Mit einer erfindungsgemäß ausgeführten Sägemaschine, die beispielsweise als Säbelsägemaschine oder Stichsägemaschine ausgeführt sein kann, ist auf einfache Weise eine vorteilhafterweise gute Sägeleistung erzielbar. Dies ist dadurch bedingt, dass eine Bewegung der Lagereinrichtung gegenüber der Gehäuseeinrichtung besonders flexibel möglich ist und daher eine Bewegung der Pendelhubstange gegenüber der Gehäuseeinrichtung im Betrieb in gewünschtem Umfang einstellbar und beispielsweise ein Abheben eines mit der Pendelhubstange verbundenen Sägeblatts bzw. von Bereichen des Sägeblatts von einem zu bearbeitenden Werkstück verhindert werden kann. Dies ist dadurch erzielt, dass die Lagereinrichtung in dem zweiten Verbindungsbereich in einer zumindest eine translatorische Bewegungskomponente aufweisenden Bewegung gegenüber der Gehäuseeinrichtung verlagerbar ist und hierdurch eine sehr frei gestaltbare Bewegung der Lagereinrichtung gegenüber der Gehäuseeinrichtung erzielbar ist.

Bei der erfindungsgemäß ausgeführten Sägemaschine weist die Lagereinrichtung keinen direkten Gelenkpunkt gegenüber der Gehäuseeinrichtung auf, bei der eine Bewegung der Lagereinrichtung gegenüber der Gehäuseeinrichtung eine reine Schwenkbewegung ohne eine translatorische Bewegungskomponente darstellt.

Eine Bewegung der Lagereinrichtung gegenüber der Gehäuseeinrichtung ist besonders einfach und kraftoptimiert möglich, wenn der erste Verbindungsbereich und der zweite Verbindungsbereich der Lagereinrichtung in Längsrichtung der Sägemaschine beabstandet zueinander angeordnet sind. Grundsätzlich können die Verbindungsbereiche frei und beliebig im Bereich der Lagereinrichtung angeordnet sein.

Bei einer vorteilhaften Ausführung einer handgeführten Sägemaschine nach der Erfindung kann die Bewegung der Lagereinrichtung im ersten Verbindungsbereichs und im zweiten Verbindungsbereichs derart aufeinander abgestimmt sein, dass die Pendelhubstange im Betrieb der Sägemaschine vorzugsweise in sämtlichen Bereichen in Längsrichtung der Pendelhubstange gegenüber der Gehäuseeinrichtung eine insbesondere identische Bewegung, insbesondere eine kreisförmige oder ellipsenförmige Bewegung, durchführt. Auf diese Weise führen im Betrieb der Sägemaschine auch Sägezähne eines mit der Pendelhubstange verbundenen Sägeblatts vorzugsweise eine im Wesentlichen vergleichbare, vorzugsweise nahezu identische Bewegung aus, so dass im Betrieb der Sägemaschine auf einfache und sichere Weise ein Abheben von Sägezähnen von einem zu bearbeitenden Werkstück verhindert und eine gute Sägeleistung erzielt ist.

Wenn die Bewegungen der Lagereinrichtung im ersten Verbindungsbereichs und im zweiten Verbindungsbereichs derart aufeinander abgestimmt sind, dass die Lagereinrichtung im Wesentlichen senkrecht zu einer Bewegungsrichtung der Pendelhubstange verlagert wird, ist auf einfache Weise eine gute Sägeleistung der Sägemaschine erzielt, da ein Abheben eines mit der Pendelhubstange verbundenen Sägeblatts bei der Bearbeitung eines Werkstücks hierdurch sicher verhindert ist.

Bei einer konstruktiv einfachen Ausführung einer erfindungsgemäßen handgeführte Sägemaschine ist eine gegenüber der Gehäuseeinrichtung schwenkbar gelagerte Hebeleinrichtung vorgesehen, die von der Antriebseinrichtung betätigbar ist und über einen ersten Gelenkpunkt mit dem zweiten Verbindungsbereich der Lagereinrichtung verbunden ist. Auf diese Weise liegt keine direkte Verbindung der Lagereinrichtung mit der Gehäuseeinrichtung vor, so dass die Lagereinrichtung über eine entsprechende Ausgestaltung der Hebeleinrichtung sehr flexibel gegenüber der Gehäuseeinrichtung verlagerbar ist.

Um auf einfache Weise eine gewünschte Verlagerung der Lagereinrichtung im zweiten Verbindungsbereich gegenüber der Gehäuseeinrichtung zu erzielen, kann die Hebeleinrichtung in einem zweiten Gelenkpunkt schwenkbar gegenüber der Gehäuseeinrichtung gelagert sein.

Um eine gewünschte Ansteuerung der Lagereinrichtung im Betrieb der handgeführten Sägemaschine auf flexible Weise erzielen zu können, kann die Antriebseinrichtung über eine Steuerkurve mit dem ersten Verbindungsbereich der Lagereinrichtung und/oder über eine weitere Steuerkurve mit dem zweiten Verbindungsbereich der Lagereinrichtung zusammenwirken. Die jeweilige Steuerkurve ist dabei insbesondere Teil eines um eine Drehachse angetriebenen Bauteils, wobei die Steuerung über variierende radiale Abstände der Steuerkurve über dem Umfang des Bauteils erzielt wird.

Bei einer vorteilhaften Ausführung einer handgeführten Sägemaschine nach der Erfindung kann die Antriebseinrichtung über ein Kegelrad in Wirkverbindung mit der Pendelhubstange stehen, wobei eine rotatorische Bewegung des Kegelrades in eine translatorische Bewegung der Pendelhubstange überführt wird.

In einer einfachen konstruktiven Ausführung der Erfindung ist exzentrisch an dem Kegelrad ein stiftförmiges Element angeordnet ist, das in Eingriff mit einem mit der Pendelhubstange verbundenen Langloch steht, so dass hierdurch eine rotatorische Bewegung des Kegelrads in eine translatorische Bewegung der Pendelhubstange überführt wird.

Bei einer konstruktiv einfachen Ausführung der Erfindung kann die Steuerkurve und/oder die weitere Steuerkurve drehfest mit dem Kegelrad ausgeführt sein. Das Kegelrad kann beispielsweise zwei scheibenförmige Bereiche aufweisen, die über eine im Umfang variierende radiale Erstreckung eine Steuerung des jeweiligen Verbindungsbereichs der Lagereinrichtung bewirkt. Die Bereiche können dabei beispielsweise auf der gleichen Seite des Kegelrads oder auf verschiedenen Seiten des Kegelrads angeordnet sein.

Ein einfaches Zusammenwirken der Lagereinrichtung im ersten Verbindungsbereich mit der Steuerkurve ist erzielt, wenn die Lagereinrichtung über ein im ersten Verbindungsbereich der Lagereinrichtung angeordnetes Steuerelement mit der Steuerkurve in Eingriff steht, das insbesondere auf der Steuerkurve abrollt, über die Steuerkurve gleitet oder in einer Führungsbahn der Steuerkurve geführt ist.

Ebenso kann ein einfaches Zusammenwirken der Lagereinrichtung im zweiten Verbindungsbereich mit der weiteren Steuerkurve erzielt werden, wenn die Hebeleinrichtung über ein weiteres Steuerelement in Eingriff mit der weiteren Steuerkurve in Eingriff steht. Das weitere Steuerelement kann insbesondere auf der weiteren Steuerkurve abrollen, über die Steuerkurve gleiten oder in einer Führungsbahn der weiteren Steuerkurve geführt sein.

Bei einer alternativen Ausführung der Erfindung kann es auch vorgesehen sein, dass das weitere Steuerelement im zweiten Verbindungsbereich der Lagereinrichtung angeordnet ist und über die weitere Steuerkurve angetrieben ist.

Bei einer kostengünstigen Ausführung einer handgeführten Sägemaschine nach der Erfindung ist ein einziger, insbesondere als Elektromotor ausgeführter Antrieb der Antriebseinrichtung vorgesehen, mittels dem die Pendelhubstange in dem ersten Verbindungsbereich und/oder in dem zweiten Verbindungsbereich der Lagereinrichtung betätigbar ist. Alternativ hierzu kann es auch vorgesehen sein, dass mehrere Antriebe der Antriebseinrichtung vorgesehen sind, die zum Antrieb der Pendelhubstange, und der Lagereinrichtung im jeweiligen Verbindungsbereich vorgesehen sind.

Weitere Vorteile ergeben sich aus der folgenden Figurenbeschreibung. In den Figuren ist ein Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine stark schematisierte Darstellung eines Wirkprinzips einer aus dem Stand der Technik bekannten Säbelsägemaschine; und;
- Fig. 2: eine stark vereinfachte Darstellung eines Wirkprinzips einer Säbelsägemaschine nach der Erfindung.

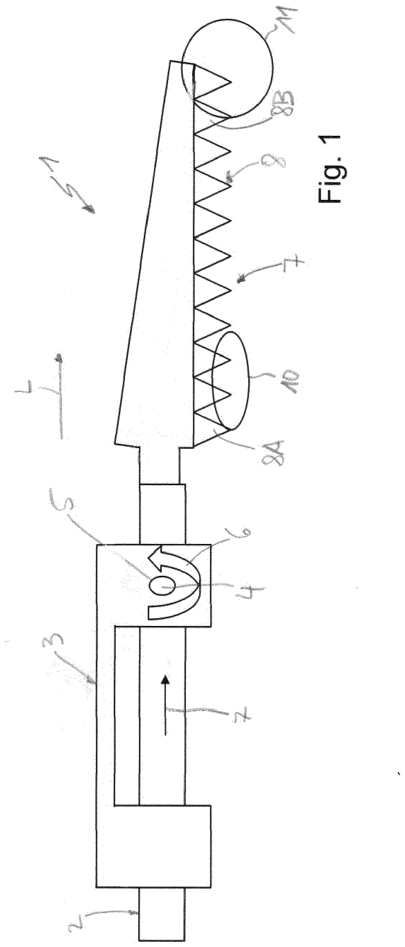

In Fig. 1 ist eine Prinzipskizze eines Ausschnitts einer bekannten Säbelsäge 1 gezeigt. Es ist hierbei eine Pendelhubstange 2 ersichtlich, die in ihrer Längsrichtung 7 verlagerbar in einer Lagereinrichtung 3 gelagert ist. Die Lagereinrichtung 3 weist vorliegend in einem in Längsrichtung L der Säbelsäge 1 vorderen Bereich ein Schwenkgelenk 4 auf, über welches die Lagereinrichtung 3 in Pfeilrichtung 6 drehbar gegenüber einem Getriebegehäuse 5 gelagert ist. In einem in Längsrichtung L der Säbelsäge 1 hinteren Bereich der Lagereinrichtung 3 greift in bekannter Weise ein nicht näher ersichtlicher Antrieb an, mittels dem die Lagereinrichtung 3 um das Schwenkgelenk 4 schwenkbar ist, wobei der Antrieb insbesondere auch zur Verlagerung der Pendelhubstange 2 in Längsrichtung L der Pendelhubstange 2 gegenüber der Lagereinrichtung 3 vorgesehen ist.

Die Pendelhubstange 2 ist in einem in Längsrichtung L der Säbelsäge 1 vorderen Bereich mit einem Sägeblatt 7 verbunden, das eine Vielzahl von Zähnen 8 aufweist. In Fig. 1 ist exemplarisch eine im Betrieb der Säbelsäge 1 resultierende Bewegung 10 einer Spitze eines ersten, in einem in Längsrichtung L der Säbelsäge 1 hinteren Bereich des Sägeblatts 7 angeordneten Sägezahn 8A und eine im Betrieb der Säbelsäge 1 resultierende Bewegung 11 einer Spitze eines zweiten, in einem in Längsrichtung L der Säbelsäge 1 vorderen Bereich des Sägeblatts 7 angeordneten Sägezahn 8B ersichtlich.

Wie Fig. 1 zu entnehmen ist, entsteht im Betrieb der Säbelsäge 1 bei einem derartigen Aufbau eine voneinander abweichende, unterschiedliche Bewegung 10, 11 verschiedener Sägezähne 8. Dies kann dazu führen, dass das Sägeblatt 7 im Betrieb der Säbelsäge 1 von einem Werkstück abhebt und eine Sägeleistung der Säbelsäge 1 in unerwünschtem Umfang reduziert ist.

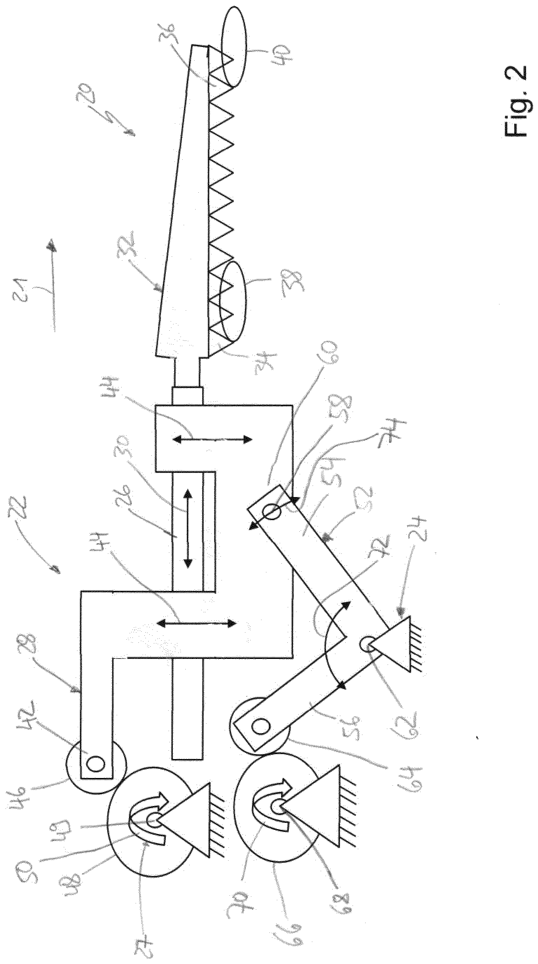

In Fig. 2 ist stark schematisiert ein Teilbereich einer erfindungsgemäß ausgeführten, als Säbelsäge 20 bzw. Säbelsägemaschine ausgebildeten Sägemaschine gezeigt. Bei einer alternativen Ausführung der Erfindung kann die Sägemaschine beispielsweise auch als Stichsägemaschine ausgeführt sein.

Die Säbelsäge 20 weist eine Getriebeeinrichtung 22 mit einer Gehäuseeinrichtung 24 auf, von der in Fig. 2 verschiedene Anbindungspunkte ersichtlich sind.

Die Getriebeeinrichtung 22 weist in bekannter Weise eine Pendelhubstange 26 auf, die in einer Lagereinrichtung 28 gelagert und mittels einer nur über verursachte Antriebsbewegungen ersichtlichen Antriebseinrichtung 27 gegenüber der Lagereinrichtung 28 in Längsrichtung 30 der Pendelhubstange 26 translatorisch verlagerbar ist.

In einem ersten Verbindungsbereich 42 ist die Lagereinrichtung 28 insbesondere in bekannter Weise von der beispielsweise als Elektromotor 27 ausgeführten Antriebseinrichtung hier in einer senkrecht zur der Längsrichtung 30 der Pendelhubstange 26 angeordneten Richtung 44 gegenüber der Gehäuseeinrichtung 22 verlagerbar. Eine derartige Betätigung der Lagereinrichtung 28 ist auf vielfältige Weise möglich. Beispielsweise kann die Lagereinrichtung 28 im ersten Verbindungsbereich 42 ein Steuerelement 46 aufweisen, welches mit einer Steuerkurve 48 zusammenwirkt. Die Steuerkurve 48 weist in Umfangsrichtung ausgehend von einem Drehpunkt 49 variierende Abstände auf, so dass bei einem Abrollen des Steuerelements 46 auf der Steuerkurve 48 bzw. einem Gleiten des Steuerelements 46 über die Steuerkurve 48 bei einer Drehung der Steuerkurve 48 gemäß des Pfeils 50 um den Drehpunkt 49 der erste Verbindungsbereich 42 der Lagereinrichtung 28 im Wesentlichen senkrecht zu der Längsrichtung 30 verlagert wird.

In Fig. 2 ist weiterhin eine Hebeleinrichtung 52 ersichtlich, die hier L-förmig mit einem ersten Schenkel 54 und einem mit dem ersten Schenkel 54 verbundenen, zweiten Schenkel 56 ausgeführt ist. Grundsätzlich kann die Hebeleinrichtung beliebig ausgeführt sein. Der erste Schenkel 54 der Hebeleinrichtung 52 ist hier in einem ersten Gelenkpunkt 58 schwenkbar mit einem zweiten Verbindungsbereich 60 der Lagereinrichtung 26 verbunden, wobei der zweite Verbindungsbereich 60 vorliegend bezüglich einer Längsrichtung 21 der Säbelsäge 20 beabstandet vor dem ersten Verbindungsbereich 42 der Lagereinrichtung 28 angeordnet ist.

Die Hebeleinrichtung 28 ist in einem zweiten Gelenkpunkt 62 schwenkbar gegenüber der Gehäuseeinrichtung 24 gelagert. In einem dem zweiten Gelenkpunkt 62 abgewandten Endbereich weist der zweite Schenkel 56 vorliegend ein weiteres Steuerelement 64 auf, welches zum Zusammenwirken mit einer weiteren Steuerkurve 66 ausgeführt ist. Die weitere Steuerkurve 66 ist um einen mit der Gehäuseeinrichtung 24 verbundenen Drehpunkt 68 drehbar gelagert, wobei die weitere Steuerkurve 66 von der Antriebseinrichtung 27 in Richtung des Pfeils 70 um den Drehpunkt 68 antreibbar ist. Die weitere Steuerkurve 66 weist wiederum eine in Umfangsrichtung variierenden Abstand zum Drehpunkt 68 auf, so dass das weitere Steuerelements 64 bei einer Drehung der weiteren Steuerkurve 66 um den Drehpunkt 68 die Hebeleinrichtung 52 gemäß dem Pfeil 72 um den zweiten Gelenkpunkt 62 verschwenkt und hieraus eine Verlagerung des ersten Gelenkpunkts 58 in Richtung des Pfeils 74 resultiert. Die Bewegung des ersten Gelenkpunkts 58 weist dabei eine translatorische Bewegungskomponente gegenüber der Gehäuseeinrichtung 24 auf und ist in Abhängigkeit von der Ausführung der Hebeleinrichtung 52 flexibel gestaltbar.

Das Zusammenwirken des Steuerelements 46 mit der Steuerkurve 48 und des weiteren Steuerelements 64 mit der weiteren Steuerkurve 66 und der Ausführung der Hebeleinrichtung 52 sind dabei derart aufeinander abgestimmt, dass im Betrieb der Sägemaschine die Lagereinrichtung 26 im Wesentlichen senkrecht zu der Längsrichtung 30 verlagert wird.

Bevorzugt ist eine einzige, beispielsweise als Elektromotor ausgeführte Antriebseinrichtung 27 vorgesehen, mittels welcher sowohl die Pendelhubstange 26 in Längsrichtung 30 als auch die Steuerkurve 48 und die weitere Steuerkurve 66 antreibbar sind. Hierbei kann es vorgesehen sein, dass die Antriebseinrichtung 27 in bekannter Weise ein Kegelrad antreibt, wobei an dem Kegelrad ein exzentrisch zu einem Drehpunkt des Kegelrads angeordnetes stiftförmiges Element angeordnet ist, das in Eingriff mit einem mit der Pendelhubstange 26 verbundenen Langloch steht. Eine Drehung des Kegelrads führt durch das Zusammenwirken des stiftförmigen Elements mit dem Langloch zu der translatorischen Bewegung der Pendelhubstange 26 gegenüber der Lagereinrichtung 28. Bevorzugt sind die Steuerkurven 48, 66 drehfest mit dem Kegelrad verbunden, so dass die Steuerkurve 48 und die weitere Steuerkurve 66 auf einfache Weise gemeinsam mit dem Kegelrad von der Antriebseinrichtung 27 antreibbar sind. Die Steuerkurven 48, 66 können einteilig mit dem Kegelrad ausgeführt sein.

Die Pendelhubstange 26 ist vorliegend in bekannter Weise in einem in Längsrichtung L der Säbelsäge 20 vorderen Bereich mit einem als Sägeblatt 32 ausgeführten Werkzeug verbunden. Das Sägeblatt 32 weist eine Vielzahl von Sägezähnen 34, 36 auf, wobei vorliegend jeweils eine Bewegungsbahn 38 einer Spitze von einem ersten Sägezahn 34 und eine Bewegungsbahn 40 von einem zweiten Sägezahn 36 im Betrieb der Sägemaschine 20 gezeigt sind, die jeweils aus einer kombinierten Bewegung der Lagereinrichtung 26 gegenüber der Gehäuseeinrichtung 24 und der Pendelhubstange 26 gegenüber der Lagereinrichtung 26 resultiert.

Der erste Sägezahn 34 ist in einem in Längsrichtung L der Säbelsäge 20 hinteren Bereich und der zweite Sägezahn 36 in einem in Längsrichtung L der Säbelsäge 20 vorderen Bereich angeordnet. Wie in Fig. 2 ersichtlich ist, ist mit der vorgeschlagenen Lösung erzielbar, dass die Bewegungsbahnen 38, 40 sämtlicher Sägezähne 34, 36 in einem Betrieb der Säbelsäge 20 im Wesentlichen identisch sind. Hierdurch ist bei einem Sägevorgang ein Abheben des Sägeblatts 32 von einem Werkstück sicher verhindert, so dass die Sägemaschine 20 eine gute Sägeleistung aufweist.

## Patentansprüche

1. Handgeführte Sägemaschine (20) mit einer Antriebseinrichtung (27), mit einer eine Gehäuseeinrichtung (24) aufweisenden Getriebeeinrichtung (22) und mit einer Pendelhubstange (26), die in Wirkverbindung mit einem insbesondere als Sägeblatt (32) ausgeführten Werkzeug bringbar und in einer Lagerungseinrichtung (28) gelagert ist, wobei die Antriebseinrichtung (27) zur Verlagerung der Pendelhubstange (26) gegenüber der Lagerungseinrichtung (28) im Wesentlichen in einer linearen Bewegung (30) ausgeführt ist, und wobei die Antriebseinrichtung (27) in einem ersten Verbindungsbereich (42) mit der Lagerungseinrichtung (28) zur Bewegung des ersten Verbindungsbereichs (42) der Lagerungseinrichtung (28) gegenüber der Gehäuseeinrichtung (24) zusammenwirkt, **dadurch gekennzeichnet, dass** die Antriebseinrichtung (27) in einem zweiten Verbindungsbereich (60) mit der Lagerungseinrichtung (28) zur Bewegung des zweiten Verbindungsbereichs (60) der Lagerungseinrichtung (28) in einer zumindest eine translatorische Bewegungskomponente aufweisenden Bewegung gegenüber der Gehäuseeinrichtung (24) zusammenwirkt.

2. Handgeführte Sägemaschine nach Anspruch 1, **dadurch gekennzeichnet, dass** die Bewegung der Lagereinrichtung (28) im ersten Verbindungsbereichs (42) und im zweiten Verbindungsbereichs (60) derart aufeinander abgestimmt sind, dass die Pendelhubstange (26) im Betrieb der Sägemaschine (20) vorzugsweise in sämtlichen Bereichen in Längsrichtung (30) der Pendelhubstange (26) eine insbesondere identische Bewegung durchführt.

3. Handgeführte Sägemaschine nach einem der Ansprüche 1 oder 2, **dadurch gekennzeichnet, dass** die Bewegung der Lagereinrichtung (28) im ersten Verbindungsbereichs (42) und im zweiten Verbindungsbereichs (60) derart aufeinander abgestimmt sind, dass die Lagereinrichtung (28) im Betrieb der Sägemaschine (20) im Wesentlichen senkrecht zu einer Bewegungsrichtung (30) der Pendelhubstange (26) verlagert ist.

4. Handgeführte Sägemaschine nach einem der Ansprüche 1 bis 3, **dadurch gekennzeichnet, dass** eine gegenüber der Gehäuseeinrichtung (24) schwenkbar gelagerte Hebeleinrichtung (52) vorgesehen ist, die von der Antriebseinrichtung (27) betätigbar ist und über einen ersten Gelenkpunkt (58) in dem zweiten Verbindungsbereich (60) mit der Lagereinrichtung (28) verbunden ist.

5. Handgeführte Sägemaschine nach Anspruch 4, **dadurch gekennzeichnet, dass** die Hebeleinrichtung (52) in einem zweiten Gelenkpunkt (62) schwenkbar gegenüber der Gehäuseeinrichtung (24) gelagert ist.

6. Handgeführte Sägemaschine nach einem der vorhergehenden Ansprüche, **dadurch gekennzeichnet, dass** die Antriebseinrichtung (27) über eine Steuerkurve (48) mit dem ersten Verbindungsbereich (42) der Lagereinrichtung (28) zusammenwirkt.

7. Handgeführte Sägemaschine nach einem der vorhergehenden Ansprüche, **dadurch gekennzeichnet, dass** die Antriebseinrichtung (27) über eine weitere Steuerkurve (66) mit dem zweiten Verbindungsbereich (60) der Lagereinrichtung (28) zusammenwirkt.

8. Handgeführte Sägemaschine nach einem der vorhergehenden Ansprüche, **dadurch gekennzeichnet, dass** die Antriebseinrichtung (27) über ein Kegelrad in Wirkverbindung mit der Pendelhubstange (26) steht.

9. Handgeführte Sägemaschine nach Anspruch 8, **dadurch gekennzeichnet, dass** exzentrisch an dem Kegelrad ein stiftförmiges Element angeordnet ist, das in Eingriff mit einem mit der Pendelhubstange (26) verbundenen Langloch steht.

10. Handgeführte Sägemaschine nach einem der Ansprüche 6 bis 9, **dadurch gekennzeichnet, dass** die Steuerkurve (48) und/oder die weitere Steuerkurve (66) drehfest mit dem Kegelrad ausgeführt sind.

11. Handgeführte Sägemaschine nach einem der Ansprüche 6 bis 10, **dadurch gekennzeichnet, dass** die Lagereinrichtung (28) über ein im ersten Verbindungsbereich (42) der Lagereinrichtung (28) angeordnetes Steuerelement (46) mit der Steuerkurve (48) in Eingriff steht.

12. Handgeführte Sägemaschine nach einem der Ansprüche 7 bis 11, **dadurch gekennzeichnet, dass** die Hebeleinrichtung (52) über ein weiteres Steuerelement (64) in Eingriff mit der weiteren Steuerkurve (66) steht.

13. Handgeführte Sägemaschine nach einem der vorhergehenden Ansprüche, **dadurch gekennzeichnet, dass** ein einziger Antrieb der Antriebseinrichtung vorgesehen ist, mittels dem die Pendelhubstange (26) in dem ersten Verbindungsbereich (42) und/oder in dem zweiten Verbindungsbereich (60) der Lagereinrichtung (28) verlagerbar ist.
